# EUROPÄISCHE PATENTANMELDUNG

(11) **EP 0 841 091 A2**
(43) Veröffentlichungstag der Anmeldung: **13.05.1998**
(21) Anmeldenummer: 97119393.3
(22) Anmeldetag: 06.11.1997
(51) Int. Cl.: B01J 23/75, B01J 23/34

(54) **Vollmetallischer Katalysator und Verfahren zu seiner Herstellung**

(30) Priorität: 08.11.1996 DE 19646131
(71) Anmelder: Krupp VDM GmbH, 58791 Werdohl (DE)
(72) Erfinder: Koppe, Jürgen, Dr. rer. nat., 06258 Schkopau (DE); Lausch, Hartmut, Dr. rer. nat., 06218 Halle (DE); Tauchnitz, Heiko, Dr. rer. nat., 06688 Wengelsdorf (DE); Eichhorst, Volker, Dipl.-Ing., 06110 Halle (DE); Heubner, Ulrich, Dr.-Ing., 58791 Werdohl (DE); Herda, Wilfried, Dipl.-Ing., 40489 Düsseldorf (DE)

(57) **Zusammenfassung**

Vollmetallischer Katalysator aus einem cobalt- und/oder manganhaltigen metallischen Werkstoff zum Abbau nitroser Gase im Temperaturbereich bis 800 °C. Das Verfahren zur Herstellung dieses Katalysators ist dadurch gekennzeichnet, daß der Katalysatorwerkstoff für eine Zeit von 5 bis 500 Minuten einer Erwärmung im Temperaturbereich von 500 bis 1.200 °C in Gegenwart von Sauerstoff unterzogen und nachfolgend mit einer reduktiv wirkenden organischen Substanz enthaltenden wäßrigen Lösung behandelt wird. Danach wird der Katalysator erneut 5 bis 500 min lang bei einer
Temperatur im Bereich von 500 bis 1.200 °C zur Ausbildung von Metalloxiden, insbesondere Cobalt- und/oder Manganoxiden auf seiner Oberfläche thermisch behandelt.

## Beschreibung

Die Erfindung betrifft einen vollmetallischen Katalysator zum Abbau nitroser Gase im Temperaturbereich bis 800 °C und ein Verfahren zu seiner Herstellung.

Es ist bekannt, nitrose Gase in Gegenwart von aluminiumoxid-, alumosilicat-oder polyphospatgeträgerten o.ä. und meist edelmetallhaltigen Katalysatoren oder auch Vanadiumpentoxid-Katalysatoren in Gegenwart von Reduktionsmitteln, wie Ammoniak, Harnstoff, Kohlenmonoxid oder Kohlenwasserstoffen, in Stickstoff und Wasser umzuwandeln, wobei Temperaturen von 200 bis 800 °C vorherrschen [EP 0 494 388, DE 44 19 486, EP 0 415 410].

Nachteilig an diesen Verfahren ist, daß Reduktionsmittel erforderlich sind, die zwangsläufig in der stöchiometrisch benötigten Menge vorhanden oder zudosiert werden müssen. Dies erfordert einen hohen analytischen Aufwand. Weiterhin treten bei einem Wechsel der Gaszusammensetzung, der in technischen Prozessen unvermeidlich ist, bis zum Erfassen, Auswerten und Reagieren auf die veränderte Gaszusammensetzung entweder überschüssige nitrose Gase oder überschüssiges Reduktionsmittel nach der katalytischen Reinigung auf.

Der Erfindung liegt nun die Aufgabe zugrunde, einen Katalysator zu entwickeln, der in der Lage ist, die nitrosen Gase ohne Zugabe von Reduktionsmitteln in Stickstoff und Sauerstoff umzuwandeln.

Die Aufgabe wird erfindungsgemäß dadurch gelöst, daß ein Katalysator aus einer cobalt- und/oder manganhaltigen Legierung zunächst für 5 bis 500 Minuten bei 500 bis 1.200 °C in sauerstoffhaltiger Atmosphäre thermisch behandelt wird. Anschließend wird er mit einer wäßrigen Lösung in Kontakt gebracht, die reduzierend wirkende organische Substanzen, vorzugsweise Zitronensäure, Ascorbinsäure, Zucker, Stärke, Polyvinylalkohol oder Polyvinylacetat, enthält. Danach wird der Katalysator nochmals für 5 bis 500 Minuten bei 500 bis 1.200 °C thermisch so behandelt, daß sich auf seiner Oberfläche Metalloxide, insbesondere Cobalt- und/oder Manganoxide, ausbilden.

Überraschenderweise sind diese Metalloxide, insbesondere Cobalt- und/oder Manganoxide, in der Lage, in Gegenwart von nitrosen Gasen Sauerstoff aufzunehmen und diesen aufgenommenen Sauerstoff anschließend wieder abzugeben. Dadurch ergibt sich der Vorteil, daß nitrose Gase auch in sauerstoffhaltiger Atmosphäre, zum Beispiel in Gegenwart von Luft, ohne zusätzliche Reduktionsmittel in Stickstoff und Sauerstoff umgesetzt werden. Dadurch werden auch Schlupferscheinungen infolge fehlenden oder überschüssigen Reduktionsmittels vermieden.

Ein weiterer Vorteil des erfindungsgemäßen Katalysators besteht in der relativ einfachen Herstellung des Katalysators. Verbrauchter Katalysator kann in einfacher Weise durch Einschmelzen wieder in den metallischen Ursprungszustand zurückversetzt, also recycelt werden.

Der metallische Werkstoff für den Katalysator enthält bevorzugt mehr als 25 Masse-% Co. Eine vorteilhafte Zusammensetzung umfaßt (in Masse-%) 5 bis 20 % W, 5 bis 25 % Cr, bis 5 % Mn, bis 15 % Fe, bis 15 % Ni und 30 bis 70 % Cobalt als Rest.

Alternativ kann der metallische Werkstoff (in Masse-%) mehr als 20 % Mn, bevorzugt 50 bis 80 % Mn mit bis 20 % Ni und/oder Cu, Rest ein oder mehrere der Elemente Co, Cr, Mo, W, Fe, Cr, Si enthalten.

Insbesondere die Ausführungsform Draht, bevorzugt mit 0,01 bis 1 mm Durchmesser, gestattet in Form von Drahtgestrickformkörpern den Einsatz der Katalysatoren in der Art, daß im Reaktorbett ein geringer Druckabfall und eine hohe Wärmeleitfähigkeit realisiert werden können.

Die Erfindung wird durch nachfolgende Beispiele näher erläutert:

### Beispiel 1

Der erfindungsgemäße Katalysator wurde aus Drahtgestrick einer Legierung, bestehend aus (in Masse-%) 20 % Cr, 10 % Ni, 15 % W, 3 % Fe, 1,7 % Mn, 0,01 % C, 0,3 % Si, Rest Co, durch eine einstündige thermische Behandlung bei 1.050 °C in lufthaltiger Atmosphäre mit anschließender 10-minütiger Behandlung in polyvinylalkoholhaltiger wäßriger Lösung und erneutem Aufheizen bei 1.050 °C hergestellt.

Zwei Gramm dieses Katalysatormaterials wurden in einen bei 550 °C temperierten Reaktor eingebaut und mit 20 l/h mit einem Abgas beaufschlagt, das 150 ppm NOₓ enthielt. Im Reingasstrom betrug der NOₓ-Gehalt nur noch 98 ppm.

### Beispiel 2

Fünf Gramm des gleichen Katalysators wurden unter gleichen Reaktionsbedingungen mit einem 70 ppm NOₓ enthaltenden Abgasstrom beaufschlagt. Dabei wurden 71 % des Schadgases in Stickstoff und Wasser umgewandelt.

## Patentansprüche

1. Verfahren zur Herstellung eines vollmetallischen Katalysators aus einem cobalt- und/oder manganhaltigen metallischen Werkstoff zum Abbau nitroser Gase im Temperaturbereich bis 800 °C,
**dadurch gekennzeichnet,** daß der Katalysator 5 bis 500 Minuten lang einer Erwärmung im Temperaturbereich von 500 bis 1.200 °C in Gegenwart von Sauerstoff unterzogen wird, nachfolgend mit einer reduktiv wirkenden organische Substanzen enthaltenden wäßrigen Lösung behandelt wird und danach erneut 5 bis 500 Minuten lang bei einer Temperatur im Bereich von 500 bis 1.200 °C zur Ausbildung von Metalloxiden, insbesondere Cobalt- und/oder Manganoxiden auf der Oberfläche des Katalysators thermisch behandelt wird.

2. Vollmetallischer Katalysator, hergestellt nach dem Verfahren gemäß Anspruch 1,
**dadurch gekennzeichnet,** daß der metallische Werkstoff mehr als 25 Masse-% Cobalt enthält.

3. Vollmetallischer Katalysator nach Anspruch 2
**dadurch gekennzeichnet,** daß der metallische Werkstoff (in Masse-%) 5 bis 20 % W, 5 bis 25 % Cr, bis 5 % Mn, bis 15 % Fe, bis 15 % Ni und 30 bis 70 % Co als Rest enthält.

4. Vollmetallischer Katalysator, hergestellt nach dem Verfahren gemäß Anspruch 1,
**dadurch gekennzeichnet,** daß der metallische Werkstoff mehr als 20 Masse-% Mangan enthält.

5. Vollmetallischer Katalysator nach Anspruch 4,
**dadurch gekennzeichnet,** daß der metallische Werkstoff zu 50 bis 80 Masse-% Mangan und bis 20 Masse-% Nickel und/oder Kupfer, Rest ein oder mehrere der Elemente Co, Cr, Mo, W, Fe, C, Si enthält.

6. Verfahren nach Anspruch 1,
**dadurch gekennzeichnet,** daß als reduktiv wirkende organische Substanz Zitronensäure, Ascorbinsäure, Zucker, Stärke, Polyvinylalkohol oder Polyvinylacetat verwendet wird.

7. Vollmetallischer Katalysator nach Anspruch 2 bis 5,
**dadurch gekennzeichnet,** daß er die Form von Draht, Spänen oder Folien hat.

8. Vollmetallischer Katalysator nach Anspruch 7,
**dadurch gekennzeichnet,** daß der Draht einen Durchmesser von 0,01 bis 1,0 mm hat.
